# EUROPEAN PATENT APPLICATION

(11) **EP 4 767 885 A1**
(43) Date of publication of application: **01.07.2026**
(21) Application number: 25227307.3
(22) Date of filing: 26.12.2025
(51) Int. Cl.: A47J 37/06

(54) **COOKING DEVICE AND COOKING METHOD**

(30) Priority: 31.12.2024 CN 202411999015; 26.01.2025 CN 202510121165; 27.01.2025 CN 202510121975
(71) Applicant: Shenzhen Typhur Technology Co., Ltd, Shenzhen, Guangdong 518067 (CN)
(72) Inventor: WEI, Xiang, Nanshan District, Shenzhen City, Guangdong, 518067 (CN); CHEN, Xuchao, Futian District, Shenzhen City, Guangdong, 518048 (CN); LIANG, Anqi, Nanshan District, Shenzhen City, Guangdong, 518067 (CN)
(74) Representative: KIPA AB

(57) **Abstract**

A cooking device and cooking method. The cooking device comprises a housing, a carrier, a first heating element, a second heating element, a fan, and a controller. The controller is electrically connected to the first heating element, the second heating element, and the fan. The cooking modes of the cooking device comprise a first cooking mode and a non-first cooking mode, the first cooking mode is at least used for cooking pizza. In the first cooking mode, the cooking heat formed on the upper surface of the food is not greater than the cooking heat formed on the lower surface of the food. This allows the upper and lower parts of the pizza to achieve a relatively good cooking state simultaneously at the end of cooking.

## Description

### Technical Field

The present invention relates to the technical field of household appliances, and specifically to a cooking device and cooking method.

### Background Art

In current air fryers, a fan and a heating tube are defined at the top of the cavity of the air fryer. The heating tube is a heating element configured for heating surrounding air. A tray is defined at the bottom of the cavity of the air fryer, and the tray is configured for placing food. During the cooking process, the fan transfers the heated air around the heating tube to the surface of the food on the tray to achieve heating of the food.

However, the cooking modes of current air fryers are single, and the same cooking method is configured for different foods. When cooking pizza, problems such as the pizza crust at the bottom not being crispy enough, being soft and collapsed in shape, poor cooking effect, and poor texture easily occur.

### Summary of the Invention

The present invention provides a cooking device and cooking method to solve problems such as the pizza crust at the bottom not being crispy enough, being soft and collapsed in shape, poor cooking effect, and poor texture when cooking pizza.

In one embodiment, a cooking device is provided, comprising:
a housing having a cooking cavity;
a carrier defined in the cooking cavity, the carrier being configured for placing food;
a first heating element defined in the cooking cavity and located above the carrier, the first heating element being configured for heating surrounding air;
a second heating element defined in the cooking cavity and located below the carrier, the second heating element being configured for heating surrounding air;
a fan defined in the cooking cavity and located above the carrier, the fan being at least configured for transferring heated air around the first heating element to the upper surface of the food placed on the carrier; and
a controller electrically connected to the first heating element, the second heating element, and the fan, the cooking modes of the cooking device comprise a first cooking mode and a non-first cooking mode; in the first cooking mode, the controller is configured for controlling the rotational speed of the fan to be a first rotational speed;
the controller is also configured for controlling the rotational speed of the fan to be a non-first rotational speed in the non-first cooking mode; the first rotational speed is not greater than the non-first rotational speed, the first cooking mode is at least configured for cooking pizza.

In one embodiment, the non-first cooking mode comprises a preheating mode, and in the preheating mode, the controller is configured for controlling the rotational speed of the fan to be a preheating rotational speed, the first rotational speed being not greater than the preheating rotational speed.

In one embodiment, the non-first cooking mode comprises one or more second cooking modes, and the controller is also configured for controlling the rotational speed of the fan to be a second rotational speed in the second cooking mode; the first rotational speed is not greater than the second rotational speed, and the first cooking mode and the second cooking mode are configured for cooking at least one different type of food.

In one embodiment, the rotational speed range of the fan in the first cooking mode does not exceed 1000 r/min.

In one embodiment, the controller is configured for independently controlling the heating of the first heating element and the second heating element respectively; in the first cooking mode, the cooking heat formed on the upper surface of the food is not greater than the cooking heat formed on the lower surface of the food.

In one embodiment, in the first cooking mode, the first heating power of the first heating element is not greater than the second heating power of the second heating element; and/or, the first heating time of the first heating element is not greater than the second heating time of the second heating element; and/or, temperature of a first contact medium on a side of the food close to the first heating element is not greater than temperature of a second contact medium on a side of the food close to the second heating element.

In one embodiment, it further comprises a first temperature sensor and a second temperature sensor; the first temperature sensor is defined in the cooking cavity and located above the carrier, the first temperature sensor being configured for detecting the temperature above the food and generating a first detection signal; the second temperature sensor is defined in the cooking cavity and located below the carrier, the second temperature sensor being configured for detecting the temperature below the food and generating a second detection signal; the controller is respectively signal-connected to the first temperature sensor and the second temperature sensor, and the controller is configured for controlling the heating power and/or heating time of the first heating element and the second heating element based on the first detection signal and the second detection signal.

In one embodiment, the housing is provided with a first cooking mode button, the first cooking mode button being electrically connected to the controller, and when the first cooking mode button is triggered, the controller is configured for controlling the cooking device to enter the first cooking mode.

In one embodiment, a cooking device is provided, comprising:
a housing having a cooking cavity;
a carrier installed in the cooking cavity in a pull-out manner, the carrier being configured for placing food; and the carrier is provided with a handle exposed outside the housing;
a first heating element defined in the cooking cavity and located above the carrier, the first heating element being configured for heating surrounding air;
a second heating element defined in the cooking cavity and located below the carrier, the second heating element being configured for heating surrounding air;
a fan defined in the cooking cavity and located above the carrier, the fan being at least configured for transferring heated air around the first heating element to the upper surface of the food placed on the carrier; and
a controller electrically connected to the first heating element, the second heating element, and the fan, the controller being configured for independently controlling the heating of the first heating element and the second heating element respectively; the controller is at least provided with a first cooking mode, and in the first cooking mode, the cooking heat formed on the upper surface of the food is not greater than the cooking heat formed on the lower surface of the food.

In one embodiment, in the first cooking mode, the heating power of the first heating element is less than the heating power of the second heating element; and/or, the heating time of the first heating element is less than the heating time of the second heating element; and/or, temperature of a first contact medium on a side of the food close to the first heating element is not greater than temperature of a second contact medium on a side of the food close to the second heating element.

In one embodiment, it further comprises a first temperature sensor and a second temperature sensor; the first temperature sensor is defined in the cooking cavity and located above the carrier, the first temperature sensor being configured for detecting the temperature above the food and generating a first detection signal; the second temperature sensor is defined in the cooking cavity and located below the carrier, the second temperature sensor being configured for detecting the temperature below the food and generating a second detection signal; the controller is respectively signal-connected to the first temperature sensor and the second temperature sensor, and the controller is configured for controlling the heating power and/or heating time of the first heating element and the second heating element based on the first detection signal and the second detection signal.

In one embodiment, in the first cooking mode, the second temperature sensor is configured for detecting the temperature range below the food to be 200-210°C.

In one embodiment, the housing is provided with a first cooking mode button, the first cooking mode button being electrically connected to the controller, and when the first cooking mode button is triggered, the controller is configured for controlling the cooking device to enter the first cooking mode.

In one embodiment, a cooking method is provided, comprising the following steps:
acquiring a control signal, and controlling the cooking device to enter a first cooking mode or a non-first cooking mode according to the control signal;
in the first cooking mode or the non-first cooking mode, controlling the first heating element and/or the second heating element to heat, and controlling the fan to transfer the heat generated by the first heating element and/or the second heating element to the cooking cavity to cook the food;
the rotational speed of the fan in the first cooking mode is a first rotational speed, the rotational speed of the fan in the non-first cooking mode is a non-first rotational speed, the first rotational speed is not greater than the non-first rotational speed, and the first cooking mode is at least configured for cooking pizza.

In one embodiment, the non-first cooking mode comprises a preheating mode, and in the preheating mode, the controller is configured for controlling the rotational speed of the fan to be a preheating rotational speed, the first rotational speed being not greater than the preheating rotational speed.

In one embodiment, the non-first cooking mode further comprises one or more second cooking modes, and the controller is also configured for controlling the rotational speed of the fan to be a second rotational speed in the second cooking mode; the first rotational speed is not greater than the second rotational speed, and the first cooking mode and the second cooking mode are configured for cooking at least one different type of food.

In one embodiment, the rotational speed range of the fan in the first cooking mode does not exceed 1000 r/min.

In one embodiment, in the first cooking mode, the cooking heat formed on the upper surface of the food is not greater than the cooking heat formed on the lower surface of the food.

In one embodiment, in the first cooking mode, the first heating power of the first heating element is not greater than the second heating power of the second heating element; and/or, the first heating time of the first heating element is not greater than the second heating time of the second heating element; and/or, temperature of a first contact medium on a side of the food close to the first heating element is not greater than temperature of a second contact medium on a side of the food close to the second heating element..

In one embodiment, in the first cooking mode, acquiring a first detection signal formed by the first temperature sensor detecting the temperature above the food and a second detection signal formed by the second temperature sensor detecting the temperature below the food, and controlling the heating power and/or heating time of the first heating element and the second heating element based on the first detection signal and the second detection signal, so that the cooking heat formed on the upper surface of the food is not greater than the cooking heat formed on the lower surface of the food.

In one embodiment, acquiring the control signal and controlling the cooking device to enter the first cooking mode or the non-first cooking mode according to the control signal comprises: acquiring a first control signal generated by the first cooking mode button, and controlling the cooking device to enter the first cooking mode according to the first control signal.

In one embodiment, a cooking method is provided, comprising the following steps:
acquiring a control signal, and controlling the cooking device to enter a first cooking mode or a non-first cooking mode according to the control signal;
in the first cooking mode, respectively controlling the first heating element and the second heating element to heat independently, and controlling the fan to transfer the heat generated by the first heating element and the second heating element to the cooking cavity to cook the food;
the cooking heat formed on the upper surface of the food is not greater than the cooking heat formed on the lower surface of the food.

In one embodiment, in the first cooking mode, the first heating power of the first heating element is not greater than the second heating power of the second heating element; and/or, the first heating time of the first heating element is not greater than the second heating time of the second heating element; and/or, temperature of a first contact medium on a side of the food close to the first heating element is not greater than temperature of a second contact medium on a side of the food close to the second heating element..

In one embodiment, in the first cooking mode, acquiring a first detection signal formed by the first temperature sensor detecting the temperature above the food and a second detection signal formed by the second temperature sensor detecting the temperature below the food, and controlling the heating power and/or heating time of the first heating element and the second heating element based on the first detection signal and the second detection signal, so that the cooking heat formed on the upper surface of the food is not greater than the cooking heat formed on the lower surface of the food.

In one embodiment, acquiring the control signal and controlling the cooking device to enter the first cooking mode or the non-first cooking mode according to the control signal comprises: acquiring a first control signal generated by the first cooking mode button, and controlling the cooking device to enter the first cooking mode according to the first control signal.

According to the cooking device and cooking method of the above embodiments, since the first rotational speed of the fan in the first cooking mode is not greater than the non-first rotational speed of the fan in the non-first cooking mode, the fan rotational speed in the first cooking mode is set to be slower. When cooking pizza in the first cooking mode, the slower rotational speed of the fan prevents the toppings composed of vegetables, fruits, and other ingredients on the upper surface of the pizza from drying out quickly, thereby maintaining good texture of the ingredients. Furthermore, the cooking device is provided with the first heating element and the second heating element, which are respectively disposed above and below the carrier. The second heating element located below can bake the pizza crust to be crispy, resulting in better appearance and texture.

### Brief Description of the Drawings

Figure 1 is a cross-sectional view of the cooking device in one embodiment;
Figure 2 is a structural block diagram of the control part of the cooking device in one embodiment;
Figure 3 is a cross-sectional view of the cooking device in one embodiment;
Figure 4 is a structural block diagram of the control part of the cooking device in one embodiment;
Figure 5 is a structural block diagram of the control part of the cooking device in one embodiment;
Figure 6 is a flowchart of the cooking method in one embodiment;
Figure 7 is a flowchart of the cooking method in one embodiment;
Figure 8 is a schematic structural diagram of the cooking device in one embodiment;
Figure 9 is a schematic structural diagram of the cooking device in one embodiment;
Figure 10 is a schematic structural diagram of the pot body and the second heating tube in one embodiment;
Figure 11 is a schematic structural diagram of the second heating tube in one embodiment;
Figure 12 is a schematic structural diagram of the second heating tube in one embodiment;
Figure 13 is a schematic structural diagram of the second heating tube in one embodiment;
Figure 14 is a schematic structural diagram of the second heating tube in one embodiment;
Figure 15 is a schematic structural diagram of the second heating tube in one embodiment;
Figure 16 is a schematic structural diagram of the pot body, the first heating tube, and the second heating tube in one embodiment;
Figure 17 is a three-dimensional structural schematic diagram of the hot air fan blade assembly in one embodiment;
Figure 18 is a front view of the hot air fan blade assembly in one embodiment;
the reference numerals are as follows:
1- housing, 11- cooking cavity, 12- installation cavity, 2- carrier, 3- first heating element, 4- second heating element, 5- fan, 6- controller, 7- first temperature sensor, 8-second temperature sensor, 9- first cooking mode button;
100- pot body; 110- cooking inner cavity; 200- first heating tube; 300- second heating tube; 310- annular structure; 311- first annular structure; 312- second annular structure; 313- third annular structure; 320- tube body; 330- first end; 340- second end; 350- first side; 360- second side; 400- fan; 500- food carrier;
51- base plate; 52- fan blade; 221- windward surface; 222- leeward surface.

### Detailed Description

Cooking devices such as air fryers use the same or similar cooking modes for pizza and other foods, without a separate cooking mode for pizza. Since most foods are uniformly mixed with multiple ingredients, high-speed blowing mode of the fan during cooking can accelerate the cooking speed and complete the cooking. However, pizza has a double-layer ingredient structure, with the upper layer being toppings composed of vegetables, fruits, and meat directly exposed on the upper layer, and the lower layer being the crust. When cooking pizza, if the fan uses a high-speed blowing mode, the high-speed airflow formed by the high-speed blowing will quickly remove moisture from the toppings on the upper end of the pizza, causing the toppings composed of vegetables, fruits, and meat to dry out quickly or even burn, resulting in poor appearance and taste.

Existing air fryers only have a heating element at the upper end of the cooking cavity, and cook food through the heating element at the upper end of the cooking cavity. However, when cooking foods with double-layer different ingredients such as pizza, using a single upper heating method easily leads to burnt toppings or relatively low heat on the pizza crust, making the pizza crust soft and unable to be crispy, resulting in relatively poor appearance and texture.

Based on the above analysis, the present application improves the cooking device (air fryer) by separately setting a pizza cooking mode. In the pizza cooking mode, the fan rotational speed is set relatively low, lower than other modes, for example, the fan rotational speed is less than or equal to 1000 r/min, such as 500 r/min, 550 r/min, 600 r/min, 650 r/min, etc. Setting a smaller fan rotational speed makes the air flow on the upper surface of the pizza relatively slow during cooking, preventing the toppings composed of vegetables, fruits, and meat on the pizza surface from being quickly dried out. When the pizza is cooked, it can still retain certain moisture, making the pizza look better and have better texture.

Furthermore, the cooking device is also provided with two heating elements, one defined at the upper end of the cooking cavity and the other at the lower end of the cooking cavity. The two heating elements can heat the food from above and below respectively. When cooking pizza, the two heating elements can bake and heat the upper and lower layers of the pizza ingredients respectively, especially the lower heating element can make the crust at the lower end of the pizza crispy, providing three-dimensional support for the pizza, preventing it from being soft, resulting in better appearance and improved texture.

Even further, the two heating elements in the cooking device can be controlled independently, so that during the cooking process, the two heating elements can output different amounts of heat, achieving heating and cooking with different heat levels for double-layer foods, allowing the pizza toppings and crust to complete cooking simultaneously. For example, during pizza heating, the cooking heat generated by the heating element above the pizza is not greater than the cooking heat generated by the heating element below the pizza, making the pizza crust crispy while preventing the toppings composed of vegetables, fruits, and meat on the upper end of the pizza from being burnt and retaining certain moisture, achieving better cooking effects.

The present invention is further described in detail below through specific embodiments in conjunction with the accompanying drawings. Similar elements in different embodiments are assigned associated similar element numbers. In the following embodiments, many detailed descriptions are provided to enable the present application to be better understood. However, those skilled in the art can easily recognize that some features may be omitted in different situations, or replaced by other elements, materials, or methods. In some cases, some operations related to the present application are not shown or described in the specification to avoid overwhelming the core part of the present application with excessive descriptions. For those skilled in the art, detailed descriptions of these related operations are not necessary; they can fully understand the related operations based on the descriptions in the specification and general technical knowledge in the art.

In addition, the features, operations, or characteristics described in the specification may be combined in any appropriate manner to form various embodiments. At the same time, the steps or actions in the method description may also be sequentially exchanged or adjusted in a manner apparent to those skilled in the art. Therefore, the various sequences in the specification and drawings are only for clearly describing a certain embodiment and do not imply a necessary sequence unless otherwise specified that a certain sequence must be followed.

The numbering of components herein, such as "first," "second," etc., is only configured to distinguish the described objects and does not have any sequential or technical meaning. The terms "connection" and "coupling" in the present application, unless otherwise specified, comprise both direct and indirect connections (couplings).

In one embodiment, a cooking device is provided. The cooking device may be an air fryer or other devices that cook food through electric heating.

In this embodiment, the cooking device adds a new cooking mode or adjusts an existing cooking mode. For convenience of description, the newly added or modified cooking mode is named the first cooking mode, or pizza cooking mode. The first cooking mode is mainly configured for cooking pizza, and the first cooking mode is also suitable for cooking other foods with upper and lower double-layer different ingredients similar to pizza. The fan rotational speed in the first cooking mode is limited to a relatively low rotational speed. The low rotational speed fan can still transfer hot air to heat the food above the food surface while avoiding excessively high wind speed that quickly dries out the toppings composed of vegetables, fruits, and meat on the upper surface of the pizza. The low wind speed blowing of the fan can ensure that the ingredients on the upper surface retain moisture after pizza preparation, resulting in better texture and appearance.

The cooking device is also provided with a first heating element and a second heating element, which are defined above and below the carrier respectively, and are configured for heating the upper and lower ends of the food. Since pizza is a food with double-layer different ingredients, heating through upper and lower different heating elements can achieve better cooking effects. For example, the second heating element located below can cook and heat the lower crust of the pizza to be crispy, providing shaping for the pizza, making the lower crust not soft, and providing three-dimensional support for the upper ingredients.

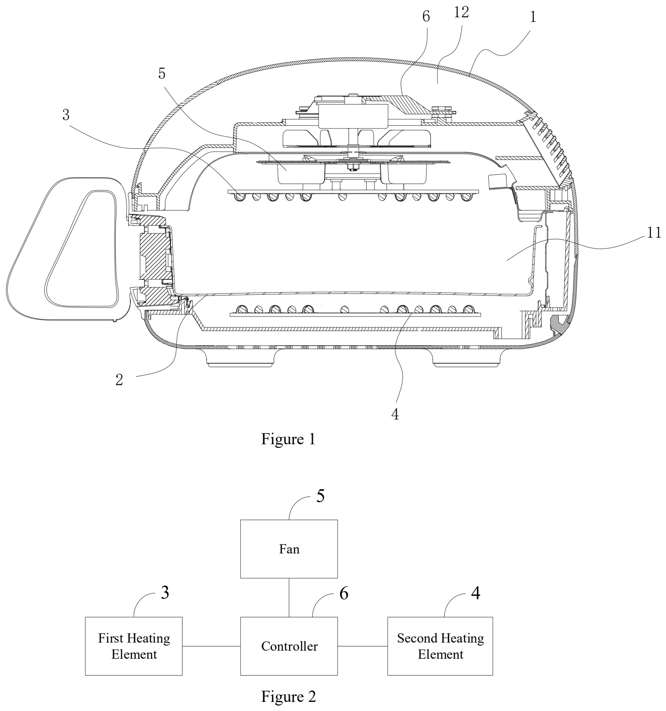

Referring to Figures 1 and 2, the cooking device in this embodiment mainly comprises a housing 1, a carrier 2, a first heating element 3, a second heating element 4, a fan 5, and a controller 6.

The housing 1 has a cooking cavity 11 and an installation cavity 12 inside. The cooking cavity 11 is located inside the housing 1. The housing 1 may be a drawer-type structure, which can open and close the cooking cavity 11 by pulling to achieve placing and removing food. The housing 1 may also be a flip-cover type structure, which can also open and close the cooking cavity 11 by flipping to achieve placing and removing food.

The installation cavity 12 and the cooking cavity 11 may be separated by structures such as an inner cover. The cooking cavity 11 is configured for cooking food, and the installation cavity 12 is configured for accommodating and installing components. The installation cavity 12 and the cooking cavity 11 are separated to prevent heat in the cooking cavity 11 from diffusing into the installation cavity 12 and affecting the normal operation of components in the installation cavity 12.

The carrier 2 is defined in the cooking cavity 11 and located at the lower end position of the cooking cavity 11. The carrier 2 may be fixed in the cooking cavity 11 by screws, snaps, etc. The carrier 2 may also be directly placed in the cooking cavity 11, forming a separate structure with the housing 1. The user can place food on the carrier 2, then put it into the cooking cavity 11 together, and remove the food and carrier 2 from the cooking cavity 11 together. For example, the carrier 2 is defined in the cooking cavity 11 in a pull-out manner, and the carrier 2 is provided with a handle exposed outside the housing 1. The user can push the carrier 2 into the cooking cavity 11 through the handle, and pull the carrier 2 out from the cooking cavity 11.

The carrier 2 may be a tray structure, and the carrier 2 may be a good conductor structure such as metal, so that during the heating process, the carrier 2 can transfer heat to the food, improving cooking efficiency and achieving more uniform heating and cooking at the bottom of the ingredients.

The first heating element 3 and the second heating element 4 are resistance heating structures, for example, the first heating element 3 and the second heating element 4 are both copper tubes. The first heating element 3 and the second heating element 4 can convert electrical energy into thermal energy to heat the surrounding air, and the hot air cooks the food.

The first heating element 3 is defined in the cooking cavity 11 and located at the upper end position of the cooking cavity 11, above the carrier 2. There is sufficient spacing between the first heating element 3 and the carrier 2 to accommodate food placement.

The first heating element 3 is configured for heating surrounding air to achieve heating of the upper end of the food.

The second heating element 4 is defined in the cooking cavity 11 and located at the lower end position of the cooking cavity 11, below the carrier 2. The second heating element 4 is configured for heating surrounding air to heat the lower end of the food. The second heating element 4 may also be in direct or indirect contact with the carrier 2, transferring heat to the carrier 2, which then transfers heat to the food to heat the lower end of the food.

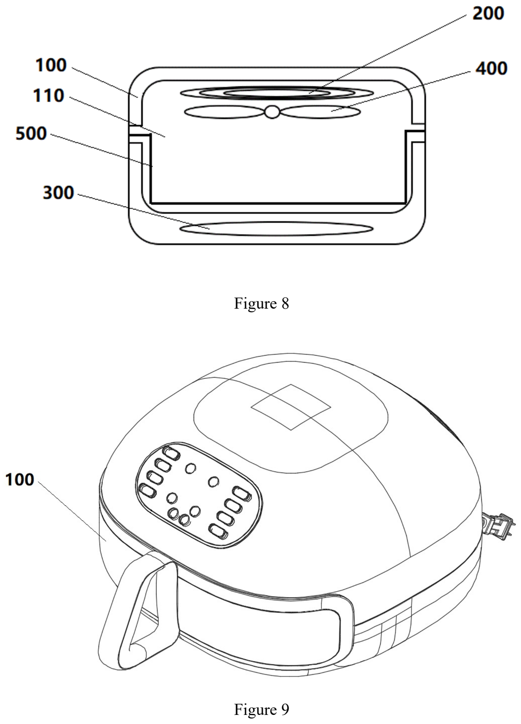

The first heating element 3 and the second heating element 4 may be spiral tube structures, forming a heating surface with a larger heating area, which is beneficial for improving the uniformity and efficiency of heating and baking. For details of the first heating element 3 and the second heating element 4, see Figure 8.

The motor part of the fan 5 is defined in the installation cavity 12 to avoid heat damage to the motor. The blade part of the fan 5 is defined in the cooking cavity 11, with the blades of the fan 5 located above the carrier 2 and above the first heating element 3. The fan 5 can blow air from top to bottom in the cooking cavity 11, blowing the hot air heated around the first heating element 3 to the upper surface of the food to heat the food.

The controller 6 is defined in the installation cavity 12, and the controller 6 may be a circuit board or other structure. The controller 6 is electrically connected to the first heating element 3, the second heating element 4, and the fan 5. The controller 6 is configured for controlling the heating power and heating time of the first heating element 3 and the second heating element 4, and also for controlling the rotational speed and blowing time of the fan 5. The controller 6 can independently control the first heating element 3, the second heating element 4, and the fan 5 respectively, achieving different heating temperatures for the first heating element 3 and the second heating element 4 in any cooking mode, which can be combined to form different cooking modes to meet the heating and cooking needs of different foods. In different cooking modes or preheating modes, the temperatures of the first heating element 3 and the second heating element 4 may also be different. It can be understood that in some embodiments, the cooking mode is different from the preheating mode, and the mode from receiving the start cooking instruction to the end of cooking is the cooking mode.

In other embodiments, the controller 6 may not be defined in the cooking device, and the controller 6 may also be a controller of a mobile terminal or other device. A wireless communication module is provided in the cooking device, and the controller 6 is signal-connected to the first heating element 3, the second heating element 4, and the fan 5 through the wireless communication module. That is, the controller 6 can also control the cooking operation of the cooking device through remote wireless communication.

In this embodiment, the cooking device comprises a first cooking mode and a non-first cooking mode. The cooking modes of the cooking device are pre-set in the controller 6, and the controller 6 is configured for controlling and implementing the cooking modes of the cooking device. The first cooking mode may also be called the pizza cooking mode, mainly configured for cooking pizza, and may also be configured for cooking other foods with double-layer ingredients similar to pizza. The non-first cooking mode may comprise one or more other cooking modes, configured for cooking other foods besides pizza.

In this embodiment, in the first cooking mode, the controller 6 controls the rotational speed of the fan 5 to be a first rotational speed; in the non-first cooking mode, the controller 6 controls the rotational speed of the fan 5 to be a non-first rotational speed, and the first rotational speed is not greater than the non-first rotational speed. The first rotational speed not greater than the non-first rotational speed comprises at least the following situations: the first rotational speed and the non-first rotational speed may be fixed values, then the first rotational speed is not greater than the non-first rotational speed; the first rotational speed and the non-first rotational speed may also be interval range values, then the maximum value of the first rotational speed is not greater than the maximum value of the non-first rotational speed, and the interval range values of the first rotational speed and the non-first rotational speed may not overlap or partially overlap; the first rotational speed and the non-first rotational speed may also be interval range values, then the average value of the first rotational speed in this cooking mode is not greater than the average value of the non-first rotational speed in the non-first cooking mode.

In the first cooking mode, the rotational speed range of the fan 5 at the first rotational speed does not exceed 1000 r/min, and the maximum value of the first rotational speed of the fan 5 is less than or equal to 1000 r/min. Preferably, the first rotational speed of the fan 5 is around 500 r/min. In the non-first cooking mode, the rotational speed range of the fan 5 at the second rotational speed exceeds 1000 r/min, and the maximum value of the non-first rotational speed of the fan 5 is greater than 1000 r/min, for example, the non-first rotational speed of the fan 5 is around 1500 r/min.

In this embodiment, the first rotational speed of the fan 5 in the first cooking mode is not greater than the non-first rotational speed of the fan 5 in the non-first cooking mode, setting the rotational speed of the fan 5 in the first cooking mode to be slower. When cooking pizza in the first cooking mode, the slower rotational speed of the fan 5 prevents the toppings composed of vegetables, fruits, and other ingredients on the upper surface of the pizza from drying out quickly, maintaining good texture of the ingredients. Furthermore, the cooking device is provided with the first heating element 3 and the second heating element 4, respectively disposed above and below the carrier 2. The first heating element 3 located above can heat the upper layer ingredients of the pizza, and the second heating element 4 located below can heat the lower layer ingredients of the pizza, and the second heating element 4 can bake the pizza crust to be crispy, resulting in better appearance and texture for the pizza.

In other embodiments, in the first cooking mode, the controller 6 also controls the heat generation of the first heating element 3 to be not greater than the heat generation of the second heating element 4, further improving the cooking effect of the pizza.

The controller 6 can independently control the heating time and/or heating power of the first heating element 3 and the second heating element 4 respectively.

In the first cooking mode, the controller 6 can control the first heating time of the first heating element 3 to be not greater than the second heating time of the second heating element 4; or, the controller 6 can control the first heating power of the first heating element 3 to be not greater than the second heating power of the second heating element 4; or, the controller 6 can control the first heating time of the first heating element 3 to be not greater than the second heating time of the second heating element 4, while controlling the first heating power of the first heating element 3 to be not greater than the second heating power of the second heating element 4. By controlling the heating time and/or heating power of the first heating element 3 and the second heating element 4 respectively, the controller 6 can achieve control of the heat generation of the first heating element 3 not greater than the heat generation of the second heating element 4, so that the cooking heat formed on the upper surface of the food is not greater than the cooking heat formed on the lower surface of the food, ultimately allowing the pizza toppings and crust, which require different cooking heats, to complete cooking simultaneously.

The first heating power of the first heating element 3 not greater than the second heating power of the second heating element 4 comprises: the average heating power of the first heating element 3 not greater than the average heating power of the second heating element 4; or, at any time point within a certain time interval, the heating power of the first heating element 3 not greater than the heating power of the second heating element 4.

Controlling the heat generation of the first heating element 3 not greater than the heat generation of the second heating element 4 also comprises the temperature of the first contact medium on the side of the food close to the first heating element 3 not greater than the temperature of the second contact medium on the side of the food close to the second heating element 4. The first contact medium is air, and the air layer in contact with the upper surface of the food heats and cooks the food; the second contact medium is the carrier 2 or a placement structure such as a tray placed in the food carrier 2. Controlling the temperature of the first contact medium not greater than the temperature of the second contact medium can more accurately achieve the cooking heat formed on the upper surface of the food not greater than the cooking heat formed on the lower surface of the food.

In the first cooking mode, the cooking heat formed on the upper surface of the food is not greater than the cooking heat formed on the lower surface of the food. This makes the cooking heat received by the upper surface of the pizza not greater than the cooking heat on the lower surface of the pizza. The smaller cooking heat on the upper surface of the pizza can ensure that the toppings composed of vegetables, fruits, meat, etc., are cooked without being dried or crisped, resulting in better texture; while the larger cooking heat on the lower surface of the pizza can make the lower crust of the pizza cooked and crispy, not only forming three-dimensional support without being soft, but also having better texture; Meanwhile, it allows the upper and lower parts of the pizza to achieve a relatively good cooking state simultaneously at the end of cooking.

In the non-first cooking mode, the first heating element 3 and the second heating element 4 can be controlled independently, or controlled simultaneously for synchronous heating or sequential heating. The heat generation of the first heating element 3 and the second heating element 4 may be the same, or the heat generation of the first heating element 3 may not be greater than the heat generation of the second heating element 4, or the heat generation of the first heating element 3 may be greater than the heat generation of the second heating element 4. That is, in the non-first cooking mode, the heating sequence and heat generation of the first heating element 3 and the second heating element 4 can be controlled according to the cooking needs of other foods.

In the non-first cooking mode, the controller 6 can also control one of the first heating element 3 and the second heating element 4 to heat while the other does not heat, to meet the cooking needs of specific foods.

The cooking device is provided with independently controllable first heating element 3 and second heating element 4, respectively disposed above and below the carrier. The second heating element located below can bake the pizza crust to be crispy, resulting in better appearance and texture. Furthermore, the heat generation of the first heating element 3 is not greater than the heat generation of the second heating element 4, so that the cooking heat formed on the upper surface of the food is not greater than the cooking heat formed on the lower surface of the food, making the cooking heat on the upper surface of the pizza not greater than on the lower surface, to cook pizza with better appearance and texture.

In other embodiments, the non-first cooking mode comprises a preheating mode, and in the preheating mode, the controller 6 is configured for controlling the rotational speed of the fan 5 to be a preheating rotational speed, which is greater than the first rotational speed in the first cooking mode.

The first cooking mode may comprise a preheating mode before it. In the preheating mode, the controller 6 controls the fan 5 to run at high rotational speed to quickly and uniformly heat the cooking cavity 11 to complete preheating, then place the pizza into the cooking cavity 11, and finally cook the pizza using the first cooking mode.

The first cooking mode may not comprise a preheating mode, and the first cooking mode can complete the cooking of the pizza independently.

The preheating mode can also serve as preheating before one or more other non-first cooking modes. After the preheating mode is completed, other non-first cooking modes are performed to meet food cooking needs.

The setting of the preheating mode allows food to start cooking in a higher temperature environment, accelerating cooking efficiency and improving the texture of some foods.

In other embodiments, in the preheating mode, the fan 5 may also use low rotational speed for preheating to meet the cooking needs of some foods.

In other embodiments, the non-first cooking mode comprises one or more second cooking modes, multiple second cooking modes are multiple modes different from the first cooking mode, that is, multiple second cooking modes are multiple different cooking modes. The first cooking mode and the second cooking mode are configured for cooking at least one different type of food, for example, the first cooking mode is configured for cooking pizza, and the second cooking mode is configured for cooking other foods besides pizza.

In the second cooking mode, the controller 6 is configured for controlling the rotational speed of the fan 5 to be a second rotational speed, and the second rotational speed is greater than the first rotational speed in the first cooking mode. Among them, multiple second cooking modes have different second rotational speeds, and multiple second rotational speeds are all greater than the first rotational speed.

For example, one second cooking mode is mainly configured for cooking ordinary bread. Ordinary bread is mainly made of flour as a whole. In the second cooking mode, the fan 5 uses a higher second rotational speed to blow high-temperature air around the first heating element 3 above and around the bread, achieving faster and more efficient cooking and saving cooking time.

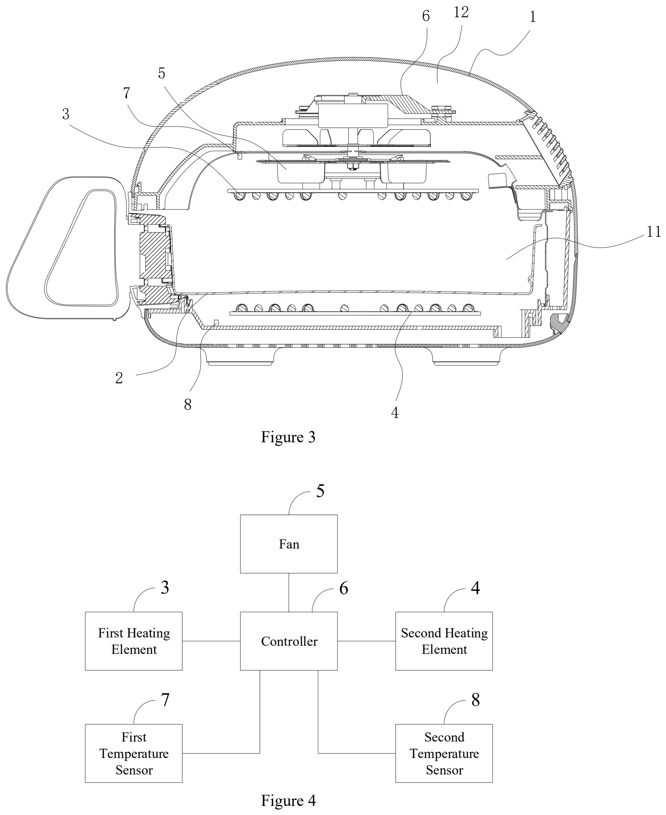

Referring to Figures 3 and 4, in other embodiments, the cooking device further comprises a first temperature sensor 7 and a second temperature sensor 8. The first temperature sensor 7 is defined in the cooking cavity 11 and located above the carrier 2, and the first temperature sensor 7 can be defined at the top position or near the top of the cooking cavity 11. The second temperature sensor 8 is defined in the cooking cavity 11 and located below the carrier 2, and the second temperature sensor 8 can be defined at the bottom position or near the bottom of the cooking cavity 11. The first temperature sensor 7 and the second temperature sensor 8 are respectively located above and below the food. The first temperature sensor 7 is configured for detecting the temperature above the food and generating a first detection signal; the second temperature sensor 8 is configured for detecting the temperature below the food and generating a second detection signal.

The controller 6 is respectively signal-connected to the first temperature sensor 7 and the second temperature sensor 8, and the controller 6 is configured for controlling the heating power and/or heating time of the first heating element 3 and the second heating element 4 based on the first detection signal and the second detection signal. The first temperature sensor 7 and the second temperature sensor 8 serve as real-time temperature feedback components. The controller 6 can obtain the temperatures above and below the cooking cavity 11 in real time through the first temperature sensor 7 and the second temperature sensor 8 to achieve more accurate temperature control and improve cooking effects.

For example, in the first cooking mode for cooking pizza, the controller 6 is configured for controlling the temperature range below the food to be 200-210°C; when the second temperature sensor 8 detects that the temperature range below the food is 200-210°C, it is determined that the temperature is normal; when the second temperature sensor 8 detects that the temperature below the food is not greater than 200°C or greater than 210°C, that is, the temperature below the food is not within 200-210°C, it is determined that the temperature is abnormal, and the controller 6 controls the second heating element 4 to correspondingly reduce or increase the heating power to return the temperature below the food to within 200-210°C.

In other embodiments, multiple first temperature sensors 7 and second temperature sensors 8 may be provided respectively, and the average value of the detection signals from multiple first temperature sensors 7 and second temperature sensors 8 can be taken to obtain more accurate real-time temperature values. Furthermore, the setting of multiple sensors can eliminate detection errors or deviations caconfigured by abnormalities in individual sensors, improving the accuracy of real-time temperature detection.

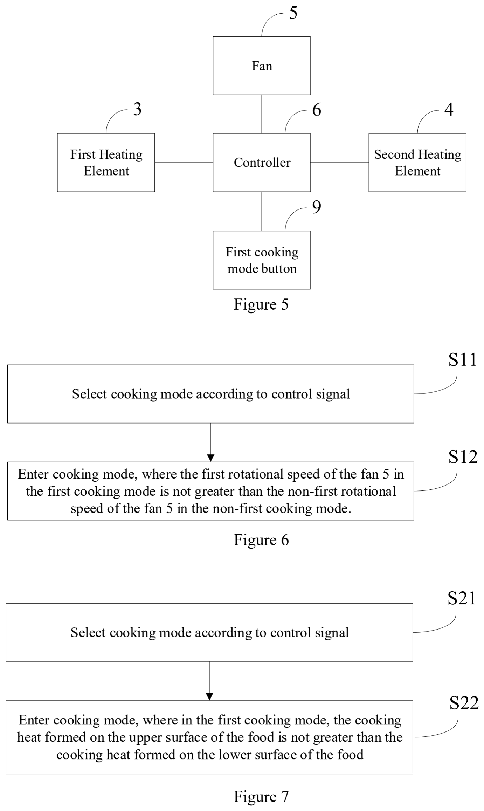

Referring to Figure 5, in other embodiments, the cooking device is also provided with a first cooking mode button 9. The first cooking mode button 9 can be directly set on the outer side of the housing 1, and the first cooking mode button 9 is a physical button. The first cooking mode button 9 is electrically connected to the controller 6, and the first cooking mode button 9 is configured for generating a first control signal. The controller 6 enters the first cooking mode based on the first control signal.

When using this cooking device, the user can directly enter the first cooking mode through the first cooking mode button 9 without going through multiple menu selections. The one-key operation is simple and efficient.

In other embodiments, when the outer side of the cooking device is provided with a touch display screen, a virtual button for the first cooking mode is set in the main menu of the touch display screen, and one-key entry into the first cooking mode can also be achieved through this virtual button, which is simple and efficient.

In other embodiments, the cooking device is also provided with physical buttons or virtual buttons for other cooking modes to quickly enter other cooking modes. For example, the outer side of the cooking device is provided with a second cooking mode button, which is signal-connected to the controller 6. The second cooking mode button is configured for generating a second control signal, and the controller 6 can enter the second cooking mode based on the second control signal.

In one embodiment, a cooking method is provided, and the cooking method uses the cooking device in the above embodiments to achieve cooking.

Referring to Figure 6, the cooking method is executed by the controller 6 of the cooking device, and the cooking method mainly comprises the following steps:
S11: Select cooking mode according to control signal;
Acquire control signal, and control the cooking device to enter the first cooking mode or non-first cooking mode according to the control signal.

The user can select the first cooking mode or non-first cooking mode through buttons or interface menus of the cooking device. When the user selects the first cooking mode, a first control signal is generated, and the controller 6 acquires the first control signal and controls the cooking device to enter the first cooking mode to cook food; when the user selects the non-first cooking mode, a non-first control signal is generated, and the controller 6 acquires the non-first control signal and controls the cooking device to enter the non-first cooking mode; for example, when the user selects the second cooking mode, a second control signal is generated, and the controller 6 acquires the second control signal and controls the cooking device to enter the second cooking mode.

When the cooking device is provided with the first cooking mode button 9, after the user presses the first cooking mode button 9, the first cooking mode button 9 generates the first control signal, and the controller 6 acquires the first control signal and controls the cooking device to enter the first cooking mode to cook food. Entering the first cooking mode through the operation of the first cooking mode button 9 is simple and efficient, providing better user experience.

S12: Enter cooking mode, where the first rotational speed of the fan 5 in the first cooking mode is not greater than the non-first rotational speed of the fan 5 in the non-first cooking mode.

The controller 6 controls the cooking device to enter different cooking modes according to different acquired control signals.

In the first cooking mode, the controller 6 respectively controls the first heating element 3 and the second heating element 4 to heat, and controls the fan 5 to transfer the heat generated by the first heating element 3 to the cooking cavity 11. The fan 5 can also drive the heat generated by the second heating element 4 to transfer to the cooking cavity 11 to cook food. The fan 5 drives air flow in the cooking cavity 11 to drive the heat generated by the first heating element 3 and the second heating element 4 to flow in the cooking cavity 11 to cook food.

In the non-first cooking mode, the controller 6 controls one or both of the first heating element 3 and the second heating element 4 to heat, and controls the fan 5 to transfer the heat generated by one or both of the first heating element 3 and the second heating element 4 to the cooking cavity 11 to cook food.

In the first cooking mode, the controller 6 controls the rotational speed of the fan 5 to be a first rotational speed; in the non-first cooking mode, the controller 6 controls the rotational speed of the fan 5 to be a non-first rotational speed, and the first rotational speed is not greater than the non-first rotational speed. The first rotational speed not greater than the non-first rotational speed comprises at least the following situations: the first rotational speed and the non-first rotational speed may be fixed values, then the first rotational speed is not greater than the non-first rotational speed; the first rotational speed and the non-first rotational speed may also be interval range values, then the maximum value of the first rotational speed is not greater than the maximum value of the non-first rotational speed, and the interval range values of the first rotational speed and the non-first rotational speed may not overlap or partially overlap.

In the first cooking mode, the rotational speed range of the fan 5 at the first rotational speed does not exceed 1000 r/min, and the maximum value of the first rotational speed of the fan 5 is less than or equal to 1000 r/min. Preferably, the first rotational speed of the fan 5 is around 500 r/min. In the non-first cooking mode, the rotational speed range of the fan 5 at the second rotational speed exceeds 1000 r/min, and the maximum value of the non-first rotational speed of the fan 5 is greater than 1000 r/min, for example, the non-first rotational speed of the fan 5 is around 1500 r/min.

In the cooking method of this embodiment, in the first cooking mode, the first rotational speed of the fan 5 is controlled to be not greater than the non-first rotational speed of the fan 5 in the non-first cooking mode, setting the rotational speed of the fan 5 in the first cooking mode to be slower. When cooking pizza in the first cooking mode, the slower rotational speed of the fan 5 prevents the toppings composed of vegetables, fruits, and other ingredients on the upper surface of the pizza from drying out quickly, maintaining good texture of the ingredients.

In other embodiments, in the first cooking mode, the controller 6 controls the heat generation of the first heating element 3 to be not greater than the heat generation of the second heating element 4 to improve the cooking effect of the pizza.

The controller 6 can independently control the heating time and/or heating power of the first heating element 3 and the second heating element 4 respectively.

In the first cooking mode, the controller 6 can control the first heating time of the first heating element 3 to be not greater than the second heating time of the second heating element 4; or, the controller 6 can control the first heating power of the first heating element 3 to be not greater than the second heating power of the second heating element 4; or, the controller 6 can control the first heating time of the first heating element 3 to be not greater than the second heating time of the second heating element 4, while controlling the first heating power of the first heating element 3 to be not greater than the second heating power of the second heating element 4. By controlling the heating time and/or heating power of the first heating element 3 and the second heating element 4 respectively, the controller 6 can achieve control of the heat generation of the first heating element 3 not greater than the heat generation of the second heating element 4, so that the cooking heat formed on the upper surface of the food is not greater than the cooking heat formed on the lower surface of the food.

The first heating power of the first heating element 3 not greater than the second heating power of the second heating element 4 comprises: the average heating power of the first heating element 3 not greater than the average heating power of the second heating element 4; or, at any time point within a certain time interval, the heating power of the first heating element 3 not greater than the heating power of the second heating element 4.

Controlling the heat generation of the first heating element 3 not greater than the heat generation of the second heating element 4 also comprises the temperature of the first contact medium on the side of the food close to the first heating element 3 not greater than the temperature of the second contact medium on the side of the food close to the second heating element 4. The first contact medium is air, and the air layer in contact with the upper surface of the food heats and cooks the food; the second contact medium is the carrier 2 or a placement structure such as a tray placed in the food carrier 2. Controlling the temperature of the first contact medium not greater than the temperature of the second contact medium can more accurately achieve the cooking heat formed on the upper surface of the food not greater than the cooking heat formed on the lower surface of the food.

In the first cooking mode, the cooking heat formed on the upper surface of the food is not greater than the cooking heat formed on the lower surface of the food. This makes the cooking heat received by the upper surface of the pizza not greater than the cooking heat on the lower surface of the pizza. The smaller cooking heat on the upper surface of the pizza can ensure that the toppings composed of vegetables, fruits, meat, etc., are cooked without being dried or crisped, resulting in better texture; while the larger cooking heat on the lower surface of the pizza can make the lower crust of the pizza cooked and crispy, not only forming three-dimensional support without being soft, but also having better texture.

In the non-first cooking mode, the first heating element 3 and the second heating element 4 can be controlled independently, or controlled simultaneously for synchronous heating or sequential heating. The heat generation of the first heating element 3 and the second heating element 4 may be the same, or the heat generation of the first heating element 3 may not be greater than the heat generation of the second heating element 4, or the heat generation of the first heating element 3 may be greater than the heat generation of the second heating element 4. That is, in the non-first cooking mode, the heating sequence and heat generation of the first heating element 3 and the second heating element 4 can be controlled according to the cooking needs of other foods.

In the non-first cooking mode, the controller 6 can also control one of the first heating element 3 and the second heating element 4 to heat while the other does not heat, to meet the cooking needs of specific foods.

In this cooking method, the controller 6 can independently control the first heating element 3 and the second heating element 4, and control the heat generation of the first heating element 3 to be not greater than the heat generation of the second heating element 4, so that the cooking heat formed on the upper surface of the food is not greater than the cooking heat formed on the lower surface of the food, making the cooking heat on the upper surface of the pizza not greater than on the lower surface, to cook pizza with better appearance and texture.

In other embodiments, the non-first cooking mode comprises a preheating mode, and in the preheating mode, the controller 6 is configured for controlling the rotational speed of the fan 5 to be a preheating rotational speed, which is greater than the first rotational speed in the first cooking mode.

This cooking method comprises a preheating mode and a first cooking mode. The first cooking mode may comprise a preheating mode before it. In the preheating mode, the controller 6 controls the fan 5 to run at high rotational speed to quickly and uniformly heat the cooking cavity 11 to complete preheating, then place the pizza into the cooking cavity 11, and finally cook the pizza using the first cooking mode.

This cooking method may also comprise the first cooking mode independently, and the first cooking mode may not comprise a preheating mode. The first cooking mode can complete the cooking of the pizza independently.

In other cooking methods, the cooking method comprises a preheating mode and a non-first cooking mode, such as a preheating mode and a second cooking mode. The preheating mode can also serve as preheating before one or more other non-first cooking modes. After the preheating mode is completed, other non-first cooking modes are performed to meet food cooking needs.

The setting of the preheating mode allows food to start cooking in a higher temperature environment, accelerating cooking efficiency and improving the texture of some foods.

In other embodiments, the non-first cooking mode comprises one or more second cooking modes, multiple second cooking modes are multiple modes different from the first cooking mode, that is, multiple second cooking modes are multiple different cooking modes. The first cooking mode and the second cooking mode are configured for cooking at least one different type of food, for example, the first cooking mode is configured for cooking pizza, and the second cooking mode is configured for cooking other foods besides pizza.

In the second cooking mode, the controller 6 is configured for controlling the rotational speed of the fan 5 to be a second rotational speed, and the second rotational speed is greater than the first rotational speed in the first cooking mode. Among them, multiple second cooking modes have different second rotational speeds, and multiple second rotational speeds are all greater than the first rotational speed.

For example, one second cooking mode is mainly configured for cooking ordinary bread. Ordinary bread is mainly made of flour as a whole. In the second cooking mode, the fan 5 uses a higher second rotational speed to blow high-temperature air around the first heating element 3 above and around the bread, achieving faster and more efficient cooking and saving cooking time.

Referring to Figures 3 and 4, in other embodiments, the cooking device further comprises a first temperature sensor 7 and a second temperature sensor 8. The first temperature sensor 7 is defined in the cooking cavity 11 and located above the carrier 2, and the first temperature sensor 7 can be defined at the top position or near the top of the cooking cavity 11. The second temperature sensor 8 is defined in the cooking cavity 11 and located below the carrier 2, and the second temperature sensor 8 can be defined at the bottom position or near the bottom of the cooking cavity 11. The first temperature sensor 7 and the second temperature sensor 8 are respectively located above and below the food. The first temperature sensor 7 is configured for detecting the temperature above the food and generating a first detection signal; the second temperature sensor 8 is configured for detecting the temperature below the food and generating a second detection signal.

The controller 6 is respectively signal-connected to the first temperature sensor 7 and the second temperature sensor 8, and the controller 6 is configured for controlling the heating power and/or heating time of the first heating element 3 and the second heating element 4 based on the first detection signal and the second detection signal. The first temperature sensor 7 and the second temperature sensor 8 serve as real-time temperature feedback components. The controller 6 can obtain the temperatures above and below the cooking cavity 11 in real time through the first temperature sensor 7 and the second temperature sensor 8 to achieve more accurate temperature control and improve cooking effects.

For example, in the first cooking mode for cooking pizza, the controller 6 is configured for controlling the temperature range below the food to be 200-210°C; when the second temperature sensor 8 detects that the temperature range below the food is 200-210°C, it is determined that the temperature is normal; when the second temperature sensor 8 detects that the temperature below the food is less than 200°C or greater than 210°C, that is, the temperature below the food is not within 200-210°C, it is determined that the temperature is abnormal, and the controller 6 controls the second heating element 4 to correspondingly reduce or increase the heating power to return the temperature below the food to within 200-210°C.

In other embodiments, multiple first temperature sensors 7 and second temperature sensors 8 may be provided respectively, and the average value of the detection signals from multiple first temperature sensors 7 and second temperature sensors 8 can be taken to obtain more accurate real-time temperature values. Furthermore, the setting of multiple sensors can eliminate detection errors or deviations caconfigured by abnormalities in individual sensors, improving the accuracy of real-time temperature detection.

Referring to Figure 5, in other embodiments, the cooking device is also provided with a first cooking mode button 9. The first cooking mode button 9 can be directly set on the outer side of the housing 1, and the first cooking mode button 9 is a physical button. The first cooking mode button 9 is electrically connected to the controller 6, and the first cooking mode button 9 is configured for generating a first control signal. The controller 6 enters the first cooking mode based on the first control signal.

When using this cooking device, the user can directly enter the first cooking mode through the first cooking mode button 9 without going through multiple menu selections. The one-key operation is simple and efficient.

In other embodiments, when the outer side of the cooking device is provided with a touch display screen, a virtual button for the first cooking mode is set in the main menu of the touch display screen, and one-key entry into the first cooking mode can also be achieved through this virtual button, which is simple and efficient.

In other embodiments, the cooking device is also provided with physical buttons or virtual buttons for other cooking modes to quickly enter other cooking modes. For example, the outer side of the cooking device is provided with a second cooking mode button, which is signal-connected to the controller 6. The second cooking mode button is configured for generating a second control signal, and the controller 6 can enter the second cooking mode based on the second control signal.

In one embodiment, a cooking device is provided. The difference between this cooking device and the above cooking device is: it does not limit the first rotational speed of the fan 5 in the first cooking mode to be not greater than the non-first rotational speed of the fan 5 in the non-first cooking mode; instead, it limits that in the first cooking mode, the cooking heat on the upper surface of the food is not greater than the cooking heat on the lower surface of the food. This setting can also improve the cooking effect of pizza compared to existing cooking devices.

The controller 6 can independently control the heating time and/or heating power of the first heating element 3 and the second heating element 4 respectively.

In the first cooking mode, the controller 6 can control the first heating time of the first heating element 3 to be not greater than the second heating time of the second heating element 4; or, the controller 6 can control the first heating power of the first heating element 3 to be not greater than the second heating power of the second heating element 4; or, the controller 6 can control the first heating time of the first heating element 3 to be not greater than the second heating time of the second heating element 4, while controlling the first heating power of the first heating element 3 to be not greater than the second heating power of the second heating element 4. By controlling the heating time and/or heating power of the first heating element 3 and the second heating element 4 respectively, the controller 6 can achieve control of the heat generation of the first heating element 3 not greater than the heat generation of the second heating element 4, so that the cooking heat formed on the upper surface of the food is not greater than the cooking heat formed on the lower surface of the food.

The first heating power of the first heating element 3 not greater than the second heating power of the second heating element 4 comprises: the average heating power of the first heating element 3 not greater than the average heating power of the second heating element 4; or, at any time point within a certain time interval, the heating power of the first heating element 3 not greater than the heating power of the second heating element 4.

Controlling the heat generation of the first heating element 3 not greater than the heat generation of the second heating element 4 also comprises the temperature of the first contact medium on the side of the food close to the first heating element 3 not greater than the temperature of the second contact medium on the side of the food close to the second heating element 4. The first contact medium is air, and the air layer in contact with the upper surface of the food heats and cooks the food; the second contact medium is the carrier 2 or a placement structure such as a tray placed in the food carrier 2. Controlling the temperature of the first contact medium not greater than the temperature of the second contact medium can more accurately achieve the cooking heat formed on the upper surface of the food not greater than the cooking heat formed on the lower surface of the food.

In the first cooking mode, the cooking heat formed on the upper surface of the food is not greater than the cooking heat formed on the lower surface of the food. This makes the cooking heat received by the upper surface of the pizza not greater than the cooking heat on the lower surface of the pizza. The smaller cooking heat on the upper surface of the pizza can ensure that the toppings composed of vegetables, fruits, meat, etc., are cooked without being dried or crisped, resulting in better texture; while the larger cooking heat on the lower surface of the pizza can make the lower crust of the pizza cooked and crispy, not only forming three-dimensional support without being soft, but also having better texture.

In the non-first cooking mode, the first heating element 3 and the second heating element 4 can be controlled independently, or controlled simultaneously for synchronous heating or sequential heating. The heat generation of the first heating element 3 and the second heating element 4 may be the same, or the heat generation of the first heating element 3 may not be greater than the heat generation of the second heating element 4, or the heat generation of the first heating element 3 may be greater than the heat generation of the second heating element 4. That is, in the non-first cooking mode, the heating sequence and heat generation of the first heating element 3 and the second heating element 4 can be controlled according to the cooking needs of other foods.

In the non-first cooking mode, the controller 6 can also control one of the first heating element 3 and the second heating element 4 to heat while the other does not heat, to meet the cooking needs of specific foods.

The cooking device is provided with independently controllable first heating element 3 and second heating element 4, respectively disposed above and below the carrier. The second heating element located below can bake the pizza crust to be crispy, resulting in better appearance and texture. Furthermore, the heat generation of the first heating element 3 is not greater than the heat generation of the second heating element 4, so that the cooking heat formed on the upper surface of the food is not greater than the cooking heat formed on the lower surface of the food, making the cooking heat on the upper surface of the pizza not greater than on the lower surface, to cook pizza with better appearance and texture.

In one embodiment, a cooking method is provided, and the cooking method uses the cooking device in the above embodiments to achieve cooking. The difference between this cooking method and the above cooking method is: it does not limit the first rotational speed of the fan 5 in the first cooking mode to be not greater than the non-first rotational speed of the fan 5 in the non-first cooking mode; instead, it limits that in the first cooking mode, the cooking heat on the upper surface of the food is not greater than the cooking heat on the lower surface of the food. This setting can also improve the cooking effect of pizza compared to existing cooking methods.

Referring to Figure 7, the cooking method is executed by the controller 6 of the cooking device, and the cooking method mainly comprises the following steps:
S21: Select cooking mode according to control signal;
Acquire control signal, and control the cooking device to enter the first cooking mode or non-first cooking mode according to the control signal.

The user can select the first cooking mode or non-first cooking mode through buttons or interface menus of the cooking device. When the user selects the first cooking mode, a first control signal is generated, and the controller 6 acquires the first control signal and controls the cooking device to enter the first cooking mode to cook food; when the user selects the non-first cooking mode, a non-first control signal is generated, and the controller 6 acquires the non-first control signal and controls the cooking device to enter the non-first cooking mode; for example, when the user selects the second cooking mode, a second control signal is generated, and the controller 6 acquires the second control signal and controls the cooking device to enter the second cooking mode.

When the cooking device is provided with the first cooking mode button 9, after the user presses the first cooking mode button 9, the first cooking mode button 9 generates the first control signal, and the controller 6 acquires the first control signal and controls the cooking device to enter the first cooking mode to cook food. Entering the first cooking mode through the operation of the first cooking mode button 9 is simple and efficient, providing better user experience.

S22: Enter cooking mode, where in the first cooking mode, the cooking heat formed on the upper surface of the food is not greater than the cooking heat formed on the lower surface of the food.

The controller 6 controls the cooking device to enter different cooking modes according to different acquired control signals.

In the first cooking mode, the controller 6 respectively controls the first heating element 3 and the second heating element 4 to heat, and controls the fan 5 to transfer the heat generated by the first heating element 3 to the cooking cavity 11. The fan 5 can also drive the heat generated by the second heating element 4 to transfer to the cooking cavity 11 to cook food. The fan 5 drives air flow in the cooking cavity 11 to drive the heat generated by the first heating element 3 and the second heating element 4 to flow in the cooking cavity 11 to cook food.

In the non-first cooking mode, the controller 6 controls one or both of the first heating element 3 and the second heating element 4 to heat, and controls the fan 5 to transfer the heat generated by one or both of the first heating element 3 and the second heating element 4 to the cooking cavity 11 to cook food.

In this cooking method, in the first cooking mode, the controller 6 controls the heat generation of the first heating element 3 to be not greater than the heat generation of the second heating element 4 to improve the cooking effect of the pizza.

The controller 6 can independently control the heating time and/or heating power of the first heating element 3 and the second heating element 4 respectively.

In the first cooking mode, the controller 6 can control the first heating time of the first heating element 3 to be not greater than the second heating time of the second heating element 4; or, the controller 6 can control the first heating power of the first heating element 3 to be not greater than the second heating power of the second heating element 4; or, the controller 6 can control the first heating time of the first heating element 3 to be not greater than the second heating time of the second heating element 4, while controlling the first heating power of the first heating element 3 to be not greater than the second heating power of the second heating element 4. By controlling the heating time and/or heating power of the first heating element 3 and the second heating element 4 respectively, the controller 6 can achieve control of the heat generation of the first heating element 3 not greater than the heat generation of the second heating element 4, so that the cooking heat formed on the upper surface of the food is not greater than the cooking heat formed on the lower surface of the food.

The first heating power of the first heating element 3 not greater than the second heating power of the second heating element 4 comprises: the average heating power of the first heating element 3 not greater than the average heating power of the second heating element 4; or, at any time point within a certain time interval, the heating power of the first heating element 3 not greater than the heating power of the second heating element 4.

Controlling the heat generation of the first heating element 3 not greater than the heat generation of the second heating element 4 also comprises the temperature of the first contact medium on the side of the food close to the first heating element 3 not greater than the temperature of the second contact medium on the side of the food close to the second heating element 4. The first contact medium is air, and the air layer in contact with the upper surface of the food heats and cooks the food; the second contact medium is the carrier 2 or a placement structure such as a tray placed in the food carrier 2. Controlling the temperature of the first contact medium not greater than the temperature of the second contact medium can more accurately achieve the cooking heat formed on the upper surface of the food not greater than the cooking heat formed on the lower surface of the food.

In the first cooking mode, the cooking heat formed on the upper surface of the food is not greater than the cooking heat formed on the lower surface of the food. This makes the cooking heat received by the upper surface of the pizza not greater than the cooking heat on the lower surface of the pizza. The smaller cooking heat on the upper surface of the pizza can ensure that the toppings composed of vegetables, fruits, meat, etc., are cooked without being dried or crisped, resulting in better texture; while the larger cooking heat on the lower surface of the pizza can make the lower crust of the pizza cooked and crispy, not only forming three-dimensional support without being soft, but also having better texture.

In the non-first cooking mode, the first heating element 3 and the second heating element 4 can be controlled independently, or controlled simultaneously for synchronous heating or sequential heating. The heat generation of the first heating element 3 and the second heating element 4 may be the same, or the heat generation of the first heating element 3 may not be greater than the heat generation of the second heating element 4, or the heat generation of the first heating element 3 may be greater than the heat generation of the second heating element 4. That is, in the non-first cooking mode, the heating sequence and heat generation of the first heating element 3 and the second heating element 4 can be controlled according to the cooking needs of other foods.

In the non-first cooking mode, the controller 6 can also control one of the first heating element 3 and the second heating element 4 to heat while the other does not heat, to meet the cooking needs of specific foods.

In this cooking method, the controller 6 can independently control the first heating element 3 and the second heating element 4, and control the heat generation of the first heating element 3 to be not greater than the heat generation of the second heating element 4, so that the cooking heat formed on the upper surface of the food is not greater than the cooking heat formed on the lower surface of the food, making the cooking heat on the upper surface of the pizza not greater than on the lower surface, to cook pizza with better appearance and texture; Meanwhile, it allows the upper and lower parts of the pizza to achieve a relatively good cooking state simultaneously at the end of cooking.

In one embodiment, referring to Figures 8-18, the pot body 100 has a cooking inner cavity 110, the first heating tube 200 is disposed at the top of the pot body 100. The second heating tube 300 is disposed at the bottom of the pot body 100, the first heating tube 200 and the second heating tube 300 are both configured for generating heat when energized to heat the air and the pot body 100, and the fan 400 is configured for driving hot air flow to circulate in the cooking inner cavity 110. The second heating tube 300 forms at least two loops of annular structure 310. The food carrier 500 is disposed in the pot body 100, and the first heating tube 200 and the second heating tube 300 are disposed on both sides of the food carrier 500 to heat the food from different directions.

On one hand, since the second heating tube 300 forms at least two loops of annular structure 310, which has higher density than a single-loop annular structure, the heat generated by the second heating tube 300 can be more uniformly transferred to the bottom of the food carrier 500, thereby making the temperatures in different areas at the bottom of the food carrier 500 more uniform. On the other hand, compared to a single-loop heating tube, forming at least two loops of annular structure 310 makes the line length of the second heating tube 300 longer under the same wire diameter and planar outer diameter, which is beneficial for increasing the power of the second heating tube 300. By generating heat from the top and bottom of the pot body 100 respectively through the first heating tube 200 and the second heating tube 300, it is beneficial for improving the heating efficiency of the cooking device, reducing the temperature difference between the top and bottom of the pot body 100, and quickly heating both sides of the food carried on the food carrier 500 to remove moisture, thereby achieving quick browning and crispiness of the food.

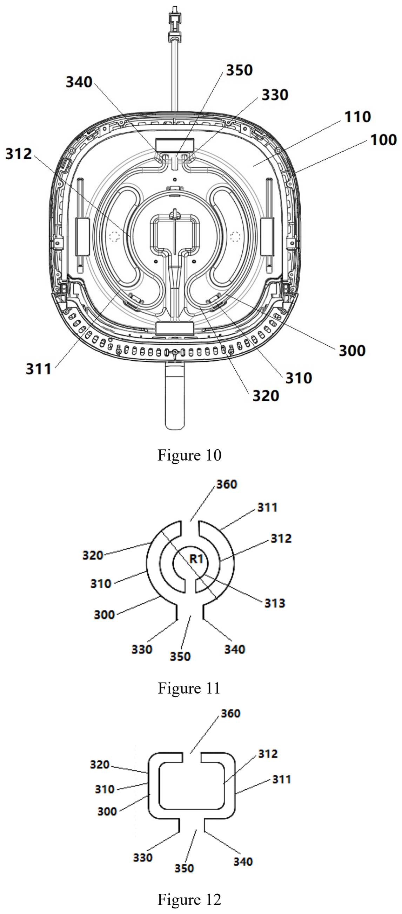

It should be noted that the planar outer diameter of the second heating tube 300 can be understood as the diameter of the outermost annular structure 310 of the second heating tube 300. The line length of the second heating tube 300 can be understood as the sum of the circumferences of all its annular structures 310 and the line lengths of the transition parts between all annular structures 310. Specifically, the planar outer diameter of the second heating tube 300 in Figure 11 can be regarded as the line segment R1 in Figure 11, and the line length of the second heating tube 300 in Figure 11 can be regarded as the sum of the circumferences of the first annular structure 311, the second annular structure 312, and the third annular structure 313 in Figure 11 and the line lengths of the transition parts between them. The wire diameter of the second heating tube 300 can be understood as the diameter of the cross-section of the second heating tube 300. The more uniform temperatures in different areas at the bottom of the pot body 100 or food carrier 500 can be understood as smaller temperature differences in different areas at the bottom of the pot body 100 or food carrier 500.

Referring to Figures 11-17, in one embodiment, at least two loops of annular structures 310 are sequentially disposed along the direction from the center to the periphery of the second heating tube 300.

This makes the annular structure 310 located at the periphery of the second heating tube 300 surround the annular structure 310 located inside, that is, the tube body 320 of the second heating tube 300 is more uniformly distributed in the inner and outer spaces, so that the heat generated by the second heating tube 300 can be more uniformly transferred to the bottom of the pot body 100, thereby making the temperatures in different areas at the bottom of the pot body 100 more uniform.

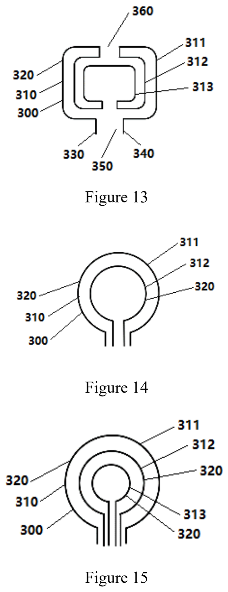

Specifically, referring to Figures 10, 12, and 14, in this embodiment, the second heating tube 300 forms two loops of annular structures 310. Referring to Figures 11, 13, and 15, in other embodiments, the second heating tube 300 may also form three or more loops of annular structures 310. The annular structure 310 is configured as a circular ring structure or a polygonal structure, for example, referring to Figures 12 and 13, the polygonal structure may be a quadrilateral, and the polygonal structure may also be a pentagon, hexagon, or other suitable shapes.

Referring to Figures 11-13, in one embodiment, the second heating tube 300 comprises a single tube body 320, a part of the single tube body 320 forms the annular structure 310 located at the periphery, and another part of the single tube body 320 bends inward to form the annular structure 310 located inside.

Forming at least two loops of annular structures 310 by bending a single tube body 320, on one hand, the power circuit of the single tube body 320 is simpler, which is beneficial for reducing the difficulty of wiring operations and the failure rate of the power circuit. On the other hand, the processing cost, quality control, and installation cost of the single tube body 320 are lower. Of course, in other embodiments, the second heating tube 300 may also comprise two or more tube bodies 320.

Referring to Figures 11-13, in one embodiment, the second heating tube 300 has a first end 330 and a second end 340, and the single tube body 320 extends from the first end 330 to the second end 340. The second heating tube 300 has oppositely disposed first side 350 and second side 360, and both the first end 330 and the second end 340 are located on the first side 350. The annular structure 310 comprises a first annular structure 311 and a second annular structure 312, the first annular structure 311 is located at the outermost periphery of the tube body 320, and the first annular structure 311 bends inward from the middle of the second side 360 to form the second annular structure 312.

On one hand, both the first end 330 and the second end 340 are located on the first side 350, facilitating the installation of the first side 350 of the second heating tube 300 in the pot body 100, and also facilitating circuit wiring on the first side 350 of the second heating tube 300. On the other hand, the first annular structure 311 bends inward from the middle of the second side 360 to form the second annular structure 312, making the first annular structure 311 and the second annular structure 312 an integrated structure, which is beneficial for reducing the processing cost, quality control, and installation cost of the second heating tube 300.

Referring to Figures 11 and 13, in one embodiment, the annular structure 310 also comprises a third annular structure 313, and the side of the second annular structure 312 facing the first end 330 and the second end 340 bends inward from the middle to form the third annular structure 313.

On one hand, the first annular structure 311, the second annular structure 312, and the third annular structure 313 are sequentially nested along the direction from the periphery to the center. On the other hand, the first annular structure 311, the second annular structure 312, and the third annular structure 313 form an integrated structure, which is beneficial for reducing the processing cost, quality control, and installation cost of the second heating tube 300. Of course, in other embodiments, the second heating tube 300 may also comprise more annular structures 310, for example, the second tube body 320 may also comprise a fourth annular structure.

Referring to Figures 14 and 15, in one embodiment, the second heating tube 300 comprises at least two tube bodies 320, each tube body 320 forms at least one annular structure 310, and the annular structures 310 formed by at least two tube bodies 320 are sequentially nested along the direction from the center to the periphery of the second heating tube 300.

This achieves the composition of the second heating tube 300 through multiple tube bodies 320. For example, referring to Figure 14, the second heating tube 300 may comprise two tube bodies 320, each tube body 320 forms one annular structure 310, and then the two annular structures 310 are sequentially nested along the direction from the periphery to the center. Similarly, referring to Figure 15, the second heating tube 300 may also comprise three tube bodies 320, forming three annular structures 310 corresponding to the three tube bodies 320 one by one, and sequentially nesting the three annular structures 310 along the direction from the periphery to the center. Of course, in the at least two tube bodies 320 comprised in the second heating tube 300, the annular structures 310 formed by a single tube body 320 are not limited to one; for example, two annular structures 310 may be formed by a single tube body 320, and then nested and combined with the annular structure 310 formed by another tube body 320.

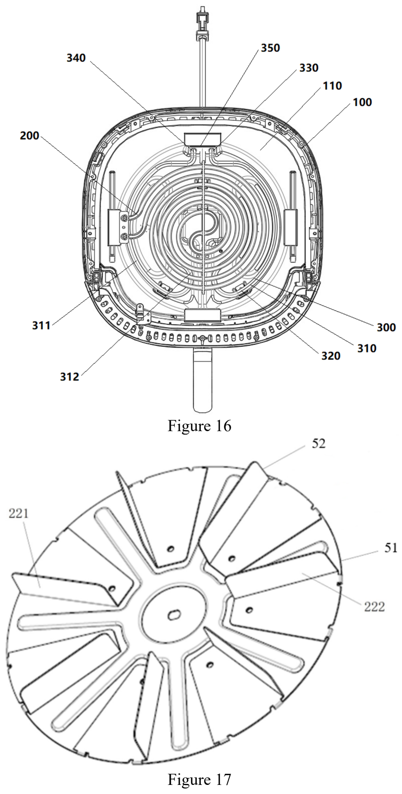

Referring to Figure 16, in one embodiment, the radial dimension of the outermost annular structure 310 in the second heating tube 300 is not less than the radial dimension of the first heating tube 200.

This makes the radial dimension of the largest annular structure 310 in the second heating tube 300 smaller than the radial dimension of the first heating tube 200, which is adapted to the allocation of installation space at the top and bottom of the pot body 100, and also adapted to the distances between the first heating tube 200 and the second heating tube 300 and the food in the pot body 100. That is, by reasonably designing the radial dimensions of the first heating tube 200 and the second heating tube 300, it is beneficial to achieve efficient utilization of installation space in the cooking device and improve the cooking effect of the cooking device on food.

It should be noted that the "radial dimension" of the annular structure 310 can be the length of the line connecting the two farthest points in the figure formed by the annular structure 310 in the plane. For example, when the annular structure 310 is a circular ring structure, its radial dimension is the diameter of the circular ring. When the ring structure is polygonal, its radial dimension is the length of the longest diagonal in the polygon.

Referring to Figures 8 and 16, in one embodiment, the cooking device further comprises a food carrier 500, the food carrier 500 is configured for carrying food in the cooking inner cavity 110, the ratio of the radial dimension of the first annular structure 311 to the radial dimension of the bottom of the food carrier 500 is not less than 1:2. The ratio of the radial dimension of the second annular structure 312 to the radial dimension of the bottom of the food carrier 500 is not less than 3:7. Preferably, the ratio of the radial dimension of the first annular structure 311 to the radial dimension of the bottom of the food carrier 500 is not less than 3:4. The ratio of the radial dimension of the second annular structure 312 to the radial dimension of the bottom of the food carrier 500 is not less than 3:7.

On one hand, when using the cooking device, the user can carry and place food in the cooking device through the food carrier 500, facilitating user convenience. On the other hand, by reasonably designing the radial dimensions of the first annular structure 311, the second annular structure 312, and the bottom of the food carrier 500, the heat emitted by the second heating tube 300 can be transferred more efficiently and uniformly to different areas at the bottom of the food carrier 500, which is beneficial for improving the cooking effect of the cooking device on the food in the food carrier 500. Specifically, the food carrier may be a frying basket, a grill rack, or other structures capable of carrying food. Of course, in other embodiments, the cooking device may not comprise the food carrier 500, but place the food directly into the pot body 100.

In some embodiments, referring to Figures 17 to 18, the blades of the fan 5 have fan blades 52 and a base plate 51. The fan blades 52 have a windward surface 221 and a leeward surface 222, both located on the fan blade part, mainly relying on the pushing action of the windward surface 221 on the hot air flow to agitate the hot air flow and promote hot air circulation in the cavity.

Continuing to refer to Figures 17 to 18, the base plate 51 has a tangent plane T-T" corresponding to the windward surface 221. The windward surface 221 or the extension surface of the windward surface 221 intersects with the outer peripheral surface of the base plate 51 and has an intersection line. The tangent plane T-T" on the base plate 51 corresponding to the windward surface 221 passes through this intersection line, and this tangent plane T-T" is tangent to the outer peripheral surface of the base plate 51; the angle between the windward surface 221 and the outer peripheral surface T-T" of the base plate 51 is set to 90° ± 20°. In this way, when the hot air fan blade assembly rotates, the effective action area on the fan blade 52 for pushing the hot air flow in the rotation direction to achieve hot air flow circulation is close to the area of the windward surface 221, which can reduce the material usage of the fan blade 52 while improving the agitation efficiency of the fan blade 52 on the hot air flow, improving the uniformity of hot air circulation in the cavity, thereby improving cooking effect and cooking speed.

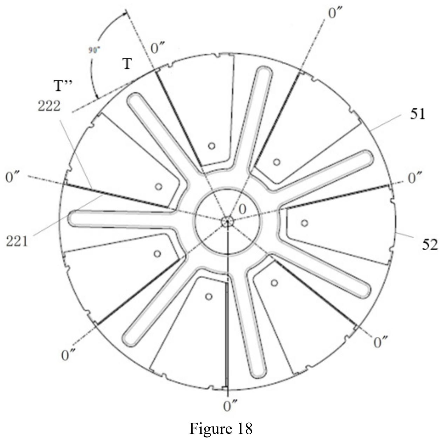

In one embodiment, referring to Figure 18, the fan blade 52 has a center plane O-O", which is a plane, and the center plane O-O" extends along the radial direction of the base plate 51, and the extension surface of the center plane O-O" passes through the central axis of the base plate 51. The thickness dimension of the fan blade part in the fan blade 52 is equal everywhere in the radial direction of the base plate 51, the windward surface 221 and the leeward surface 222 are both parallel to the center plane O-O", and the angle between the windward surface 221 and the tangent plane T-T" corresponding to the windward surface 221 is 87° or 93°. In another embodiment, the thickness dimension of the fan blade part in the fan blade 52 gradually increases from the center of the base plate 51 to the outer peripheral surface of the base plate 51 in the radial direction of the base plate 51, the windward surface 221 and the leeward surface 222 both have an angle less than 90° with the center plane O-O", and the angle between the windward surface 221 and the tangent plane T-T" corresponding to the windward surface 221 is 89° or 91°. In another embodiment, the thickness dimension of the fan blade part in the fan blade 52 gradually decreases from the center of the base plate 51 to the outer peripheral surface of the base plate 51 in the radial direction of the base plate 51, the windward surface 221 and the leeward surface 222 both have an angle less than 90° with the center plane O-O", and the angle between the windward surface 221 and the tangent plane T-T" corresponding to the windward surface 221 is 84° or 96°. In other embodiments, the extension surface of the center plane O-O" or the windward surface 221 may not pass through the central axis of the base plate 51, and an angle may be formed between the center plane O-O" or the windward surface 221 and the diameter of the base plate 51, but as long as the angle between the windward surface 221 and its corresponding tangent plane T-T" is 90° ± 20°.

The above uses specific examples to illustrate the present invention, which is only configured to help understand the present invention and not to limit the present invention. For those skilled in the technical field to which the present invention belongs, based on the idea of the present invention, several simple deductions, modifications, or substitutions can also be made.

## Claims

1. A cooking device comprising:
a housing having a cooking cavity;
a carrier installed in the cooking cavity in a pull-out manner, the carrier being configured for placing food; and the carrier is provided with a handle exposed outside the housing;
a first heating element defined in the cooking cavity and located above the carrier, the first heating element being configured for heating surrounding air;
a second heating element defined in the cooking cavity and located below the carrier, the second heating element being configured for heating surrounding air;
a fan defined in the cooking cavity and located above the carrier, the fan being at least configured for transferring heated air around the first heating element to an upper surface of the food placed on the carrier; and
**characterized in that** a controller electrically connected to the first heating element, the second heating element and the fan, the controller being configured for independently controlling heating of the first heating element and the second heating element respectively; the controller is at least provided with a first cooking mode, and in the first cooking mode, cooking heat formed on the upper surface of the food is not greater than cooking heat formed on the lower surface of the food..

2. The cooking device according to claim 1, **characterized in that** in the first cooking mode, heating power of the first heating element is not greater than heating power of the second heating element; and/or, heating time of the first heating element is not greater than heating time of the second heating element; and/or, temperature of a first contact medium on a side of the food close to the first heating element is not greater than temperature of a second contact medium on a side of the food close to the second heating element.

3. The cooking device according to claim 1, **characterized in that** further comprising a first temperature sensor and a second temperature sensor; the first temperature sensor is defined in the cooking cavity and located above the carrier, the first temperature sensor being configured for detecting temperature above the food and generating a first detection signal; the second temperature sensor is defined in the cooking cavity and located below the carrier, the second temperature sensor being configured for detecting temperature below the food and generating a second detection signal; the controller is respectively signal-connected to the first temperature sensor and the second temperature sensor, and the controller is configured for controlling the heating power and/or the heating time of the first heating element and the second heating element based on the first detection signal and the second detection signal.

4. The cooking device according to claim 1, **characterized in that** in the first cooking mode, the second temperature sensor is configured for detecting the temperature range below the food to be 200-210°C.

5. The cooking device according to claim 1, **characterized in that** the housing is provided with a first cooking mode button, the first cooking mode button being electrically connected to the controller, and when the first cooking mode button is triggered, the controller is configured for controlling the cooking device to enter the first cooking mode.

6. A cooking method, **characterized in that** comprising:
acquiring a control signal, and controlling the cooking device to enter a first cooking mode or a non-first cooking mode according to the control signal;
in the first cooking mode, respectively controlling a first heating element and a second heating element to heat independently, and controlling a fan to transfer heat generated by the first heating element and the second heating element to cooking cavity to cook food;
cooking heat formed on an upper surface of the food is not greater than cooking heat formed on a lower surface of the food.

7. The cooking method according to claim 6, **characterized in that** in the first cooking mode, first heating power of the first heating element is less than second heating power of the second heating element; and/or, first heating time of the first heating element is less than second heating time of the second heating element; and/or, temperature of a first contact medium on a side of the food close to the first heating element is not greater than temperature of a second contact medium on a side of the food close to the second heating element.

8. The cooking method according to claim 6, **characterized in that** in the first cooking mode, acquiring a first detection signal formed by a first temperature sensor detecting temperature above the food and a second detection signal formed by the second temperature sensor detecting temperature below the food, and controlling heating power and/or heating time of the first heating element and the second heating element based on the first detection signal and the second detection signal, so that the cooking heat formed on the upper surface of the food is less than the cooking heat formed on the lower surface of the food.

9. The cooking device according to claim 8, **characterized in that** in the first cooking mode, the second temperature sensor is configured for detecting the temperature range below the food to be 200-210°C.

10. The cooking method according to claim 6, **characterized in that** acquiring the control signal and controlling the cooking device to enter the first cooking mode or the non-first cooking mode according to the control signal comprises: acquiring a first control signal generated by the first cooking mode button, and controlling the cooking device to enter the first cooking mode according to the first control signal.
